# EUROPÄISCHE PATENTSCHRIFT

(11) **EP 1 417 421 B1**
(45) Veröffentlichungstag und Bekanntmachung des Hinweises auf die Patenterteilung: **26.10.2005**
(21) Anmeldenummer: 02769868.7
(22) Anmeldetag: 13.08.2002
(51) Int. Cl.: F16C 3/06, F16C 3/08

(54) **LEICHTBAUKURBELWELLE**
LIGHTWEIGHT CRANKSHAFT
VILEBREQUIN DE CONSTRUCTION LEGERE

(30) Priorität: 16.08.2001 DE 10140332
(43) Veröffentlichungstag der Anmeldung: 12.05.2004
(73) Patentinhaber: DaimlerChrysler AG, 70567 Stuttgart (DE)
(72) Erfinder: BEHR, Thomas, 89275 Elchingen (DE); WEISSKOPF, Karl-Ludwig, 73635 Rudersberg (DE); HAUG, Tilman, 89264 Weissenhorn (DE)
(86) Internationale Anmeldenummer: PCT/DE2002/002964
(87) Internationale Veröffentlichungsnummer: WO 2003/016729

(56) Entgegenhaltungen:
- EP-A- 0 960 753
- DE-A- 10 018 064
- DE-C- 10 009 008
- DE-C- 19 526 057
- FR-A- 707 013
- JP-A- 55 078 813
- JP-A- 56 131 819
- US-A- 1 494 106
- US-A1- 2002 034 643

## Beschreibung

Die Erfindung betrifft mechanische Wellen, wie sie z.B. in Antrieben eingesetzt werden. Insbesondere betrifft die Erfindung (teil-)gegossene Kurbelwellen und Verfahren zu deren Herstellung.

Antriebswellen sind mechanisch hoch belastet und daher üblicherweise aus Vollmaterial (Stahl) gefertigt. Eine massive Kurbelwelle aus geschmiedetem Stahl oder Kugelgraphitguss (GGG70) ist daher mit einem Eigengewicht von 12 bis 40 Kg die schwerste Motorkomponente bei Kraftfahrzeugen. Beispiele für derartige Wellen sind JP 56 131819 A oder US 5 064 726 zu entnehmen.

Eine nicht massive und daher leichtere Kurbelwelle übt einen günstigen Einfluß auf die erreichbaren Drehzahlen aus und führt durch die Reduktion bewegter Massen zu einem geringeren Kraftstoffverbrauch. Weitere positive Nebeneffekte ergeben sich für die Lagerung der Welle, Pleuel, Gehäusevolumen und Startergenerator und ermöglichen durch Reduktion des Gegengewichtsradius eine Verringerung der Motorbauhöhe.

Zur Reduzierung des Gewichts gibt es technische Ansätze, den Kern der Welle axial hohl auszubilden. So beschreibt die Patentschrift DE 43 14 138 C1 u.a. für den Einsatz als Kurbelwelle - eine Hohlwelle, bei der der Kern aus einem Stahlrohr gefertigt ist, welches dann in einer Gießform eingesetzt wird und mit dem gewünschten Gießmetall umgossen wird und dabei dann die jeweiligen exzentrische Strukturen (z.B. Nockenkörper) gebildet werden. Für eine weitere Reduzierung des Gewichts in Bereichen der Welle, die exzentrisch hervortreten (Nockenkörper), wird in der Patentschrift vorgeschlagen, den Stahlrohrkern in diesen Bereichen durch Druckverformung auszuweiten, um so auch bei diesen besonders schweren Gewichtsanteilen der Welle Material (Gußmetall) einzusparen.

Bei einer so gefertigten Welle sind mögliche Gewichtseinsparungen grundsätzlich eingeschränkt, da nur das zentrale Stahlrohr (mit Druckverformungen) zur Materialreduktion beiträgt. Dabei erfolgt eine Masseverringerung nur im Kernbereich der Welle, d.h. Trägheitsmomente exzentrischer Bereiche mit größerem axialen Abstand werden nur unwesentlich reduziert. Nachteilig ist bei diesem Verfahren auch, dass eine Druckverformung eines Stahlrohrkerns (vorgeschlagene Wandstärke bis 4 Millimeter) an mehreren, über die Länge der Welle verteilte Stellen fertigungstechnisch relativ aufwendig ist (erforderlich ist nach der Lehre der genannten Patentschrift eine schlagartige Innendruckbelastung bis 4000 bar). Zudem verliert das zentrale Stahlrohr gerade durch die Druckverformungen an Stabilität, da zum einen durch die Verformung in diesen Bereichen die Stärke der Wandung verringert ist und zum anderen durch lokale Abweichungen von der symmetrischen Zylinderform ungünstige Spannungsverläufe entstehen. Für moderne Hochleistungsantriebe, wie sie beispielsweise in Fahrzeugen eingesetzt werden, kann diese Ausführung einer Kurbelwelle den Anforderungen bzgl. Steifigkeit nicht genügen, da der Verformungsgrad zwischen Haupt- zum Hublager viel zu groß wäre.

Aus den Schriften DE 4 85 336 C, DE 7 14 558 C sowie aus der DD 22 40 sind außerdem Kurbelwellen bekannt, bei welchen sowohl im Bereich der Rotationsachse, als auch im Bereich der exzentrischen Strukturen Hohlräume unterschiedlicher Ausgestaltung vorgesehen sind.

Die Druckschriften DE 74 27 967 U1 und DE 27 06 072 A1 beschreiben gegossene Kurbelwellen, deren Geweicht nicht durch Hohlräume sondern durch seitliche, im Bereich der exzentrischen Strukturen angeordnete Ausnehmungen reduziert wird.

Die DE 10 22 426 B geht dabei sogar noch einen Schritt weiter und bildet praktisch die gesamte Kurbelwelle hohl aus.

All diesen Kurbelwellen ist es gemeinsam, dass durch die Hohlräume zwar Vorteile hinsichtlich des Gewichts der Kurbelwelle zu erzielen sind, die Festigkeit bzw. Steifigkeit der Kurbelwelle wird durch die Hohlräume und/oder Ausnehmungen jedoch gegenüber einer massiven Bauweise herabgesetzt.

Des weiteren ist es aus der DE 196 50 613 A1 ein Bauteil mit einem Kern aus Metallschaum bekannt. Das Bauteil wird dabei durch gießen um den Kern aus Metallschaum hergestellt. Eine Anwendung für ein derartiges Bauteil in Form einer Pleuelstange ist in der DE 100 18 064 A1 beschrieben.

In der DE 40 11 948 A1 ist es beschrieben, Faser- oder Schaumwerkstoffeinlagen vor dem Umgießen durch eintauchen in die Schmelze mit einer geschlossenporigen Schicht des späteren Werkstoffes zu versehen, mit welchem sie umgossen werden. Speziell für die Verwendung von Metallschaum ist durch die DE 195 26 057 C1 außerdem eine Verfahren beschrieben, bei welchem das Bauteil aus Metallschaum, nach dem es gepreßt wurde, mittels eines thermischen Spritzens beschichtet wird.

Aus dem Abstract der JP 55-103112 A sind Kurbelwellen bekannt, bei welchen während des Gießens metallische Kerne eingelegt sind, welche in der Kurbelwelle verbleiben. In dem Abstract der JP 56-131819 A sind diese Kerne während des Gießens an geraden Rohren befestigt, welche zu Führung von Öl in der Kurbelwelle dienen. Auch der Abstract der JP 55-078813 beschriebt die Befestigung von, allerdings andersartig ausgebildeten Kernen an den Ölführungsrohren einer Kurbelwelle während des Gießens.

Letztendlich ist aus der GB 4 81 928 eine Kurbelwelle bekannt, bei welcher die Hohlräume durch Querrippen zusätzlich verstärkt werden.

Die Erfindung geht aus von dem dargelegten Stand der Technik. Ihr liegt die Aufgabe zugrunde, eine Leichtbaukurbelwelle sowie das entsprechende Herstellungsverfahren zu entwickeln, wobei einerseits eine Reduzierung des Eigengewichts der Welle erreicht werden, und andererseits die mechanische Stabilität weitestgehend erhalten bleiben soll, so dass die aufgeführten Nachteile besser überwunden und weitere Vorteile (z.B. bzgl. Laufruhe) erreicht werden können.

Diese Aufgabe wird gelöst durch eine Leichtbaukurbelwelle mit den Merkmalen des Anspruchs 1. Das entsprechende Herstellungsverfahren ist Gegenstand des Anspruchs 6.

Weitere Einzelheiten der Erfindung und Vorzüge verschiedener Ausführungsformen ergeben sich aus den Merkmalen der Unteransprüche.

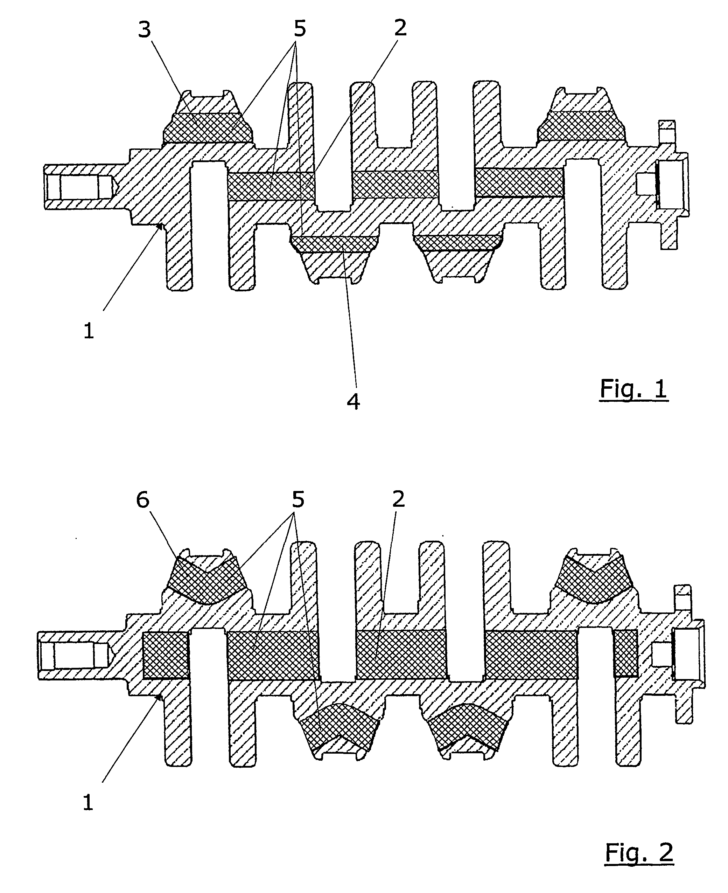

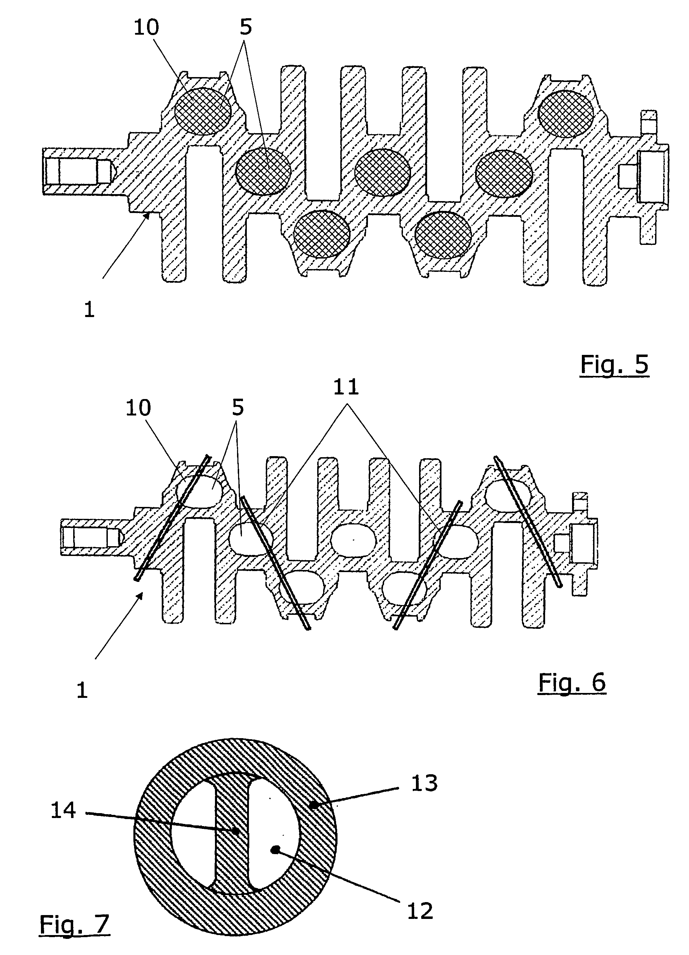

Die erfindungsgemäße Leichtbaukurbelwelle und das entsprechende Herstellungsverfahren wird im folgenden anhand bevorzugter Ausführungsformen beschrieben, wobei Bezug genommen wird auf die Abbildungen und die darin aufgeführten Bezugsziffern. Es zeigen die Figuren 1 bis 6 axiale Längsschnitte durch verschiedene Ausführungsformen der erfindungsgemäßen Leichtbaukurbelwelle und die Figur 7 eine vorgeschlagene Erweiterung zur Stabilitätssteigerung der Leichtbaukurbelwelle.

Im Einzelnen veranschaulicht
- Figur 1:: eine erste Ausführungsform der Leichtbaukurbelwelle mit mit Füllmaterial ausgefüllten zylinderförmigen Hohlräumen im Bereich der Rotationsachse sowie exzentrischer Strukturen;
- Figur 2:: eine alternative Ausführungsform mit mit Füllmaterial ausgefüllten abgewinkelt verlaufenden, stückweise zylindrischen Hohlräumen im Bereich der exzentrischen Strukturen;
- Figur 3:: eine weitere Ausführungsform der Leichtbaukurbelwelle bei der die mit Füllmaterial ausgefüllten Hohlräume im Materialinnern einen größeren Querschitt aufweisen und sich zum Außenbereich hin verjüngen;
- Figur 4:: eine andere Ausführungsform einer Leichtbaukurbelwelle, die das Verständnis der Erfindung erleichtert, aber kein Ausführungsbeispiel darstellt, mit konischen Ausnehmungen im Bereich der Rotationsachse und der exzentrischen Strukturen;
- Figur 5:: eine weitere Ausführungsform, bei der allseits geschlossene, mit stabilisierendem Material gefüllte Hohlräume im Materialinneren der Leichtbaukurbelwelle eingebracht sind;
- Figur 6:: ein Beispiel zur Fixierung von Kernen aus stabilisierendem Material bzw. hohlen Verstärkungselementen beim Gießen der Leichtbaukurbelwelle;
- Figur 7:: ein Querschnitt durch einen der Hohlräume in der Leichtbaukurbelwelle, wobei zur Verstärkung der Stabilität eine Querrippe eingebracht ist.

Gegossene Kurbelwellen weisen gegenüber geschmiedeten Kurbelwellen werkstoffbedingt eine geringere Steifigkeit (Axial-, Biege- und Torsionssteifigkeit) auf, welche durch den geringeren E-Modul begründet wird (Stahl: 210.000 MPa; Sphäroguss: 160.000 MPa). Durch die hohe Gestalt- und Designfreiheit beim Giessen kann dieser Nachteil jedoch durch konstruktive Maßnahmen wie Verrippung(en) oder einer Optimierung des Kraftflusses durch spezielle Formgebung vermindert werden.

Die Erfindung nutzt die durch das Giessen bestehende Möglichkeit einer gezielten Ausstattung der Welle bzw. der Lager mit Hohlräumen und/oder Ausnehmungen. Eine solche Hohlgestaltung kann - je nach Wellentyp - zu einer Gewichtsreduktion der Welle von bis zu 50% führen. Dabei ist die Hohlgestaltung der Lager meist mit einer Reduzierung der Steifigkeit des Bauteils verbunden. Dieser Nachteil kann durch spezielle Formgebung der Hohlräume oder Ausnehmungen weitgehend überwunden werden, da die Geometrie der Hohlgestaltung einen signifikanten Einfluß auf die Höhe der Steifigkeitsreduktion (Axial-, Biege- und Torsionssteifigkeit) hat. Durch das Fertigungsverfahren Giessen können die unterschiedlichsten Hohlraumgeometrien (z.B. konisch, zylindrisch, geschlossen, einseitig offen, zweiseitig offen) dargestellt werden, wobei die Form auch über den Querschnitt variieren kann.

In Figur 1 ist eine besonders einfache (und damit kostengünstige) Variante der erfindungsgemäßen Leichtbaukurbelwelle (1) dargestellt. Bei dieser Ausführungsform sind zylindrische Hohlräume (2) zum einen im Kern der Welle (1) entlang der Hauptachse angebracht und weitere zylindrische Hohlräume (3, 4) im Bereich der Lager exzentrisch angeordnet. Die in den verschiedenen Bereichen eingebrachten Hohlräume können dabei unterschiedlichen Durchmesser haben (vergl. 3 u. 4), um den jeweiligen Belastungen an verschiedenen Stellen der Welle Rechnung zu tragen. Dargestellt sind bei dieser einfachen Ausführung Hohlräume gleicher geometrischer Form (Zylinder) und gleicher Ausrichtung (Zylinderachse parallel zur Rotationsachse der Welle). Ohne fertigungstechnischen Mehraufwand können einfache zylindrische Hohlräume auch unterschiedliche Orientierungen (Zylinderachse mit Winkel zur Rotationsachse) aufweisen (nicht dargestellt).

Zur mechanischen Verstärkung ist ein versteifendes Füllmaterial (5) in die Hohlräume eingebracht. Hierzu werden vorzugsweise Materialien eingesetzt, die einerseits einer hohen mechanischen Belastung widerstehen können, andererseits im Vergleich zum massiven Material der Welle ein deutlich geringeres Gewicht aufweisen. Ein Auffüllen der Hohlräume (Haupt- und Pleuellager) beispielsweise mit Metallschaum führt zu einer erheblichen Versteifung bei nur geringer Massezunahme der Kurbelwelle. Je nach Vorrang - Gewichtseinsparung bzw. Festigkeit - sind unterschiedliche Metalle, z.B. Aluminium, Zink, Eisen, Stahl sowie Legierungen verwendbar,.

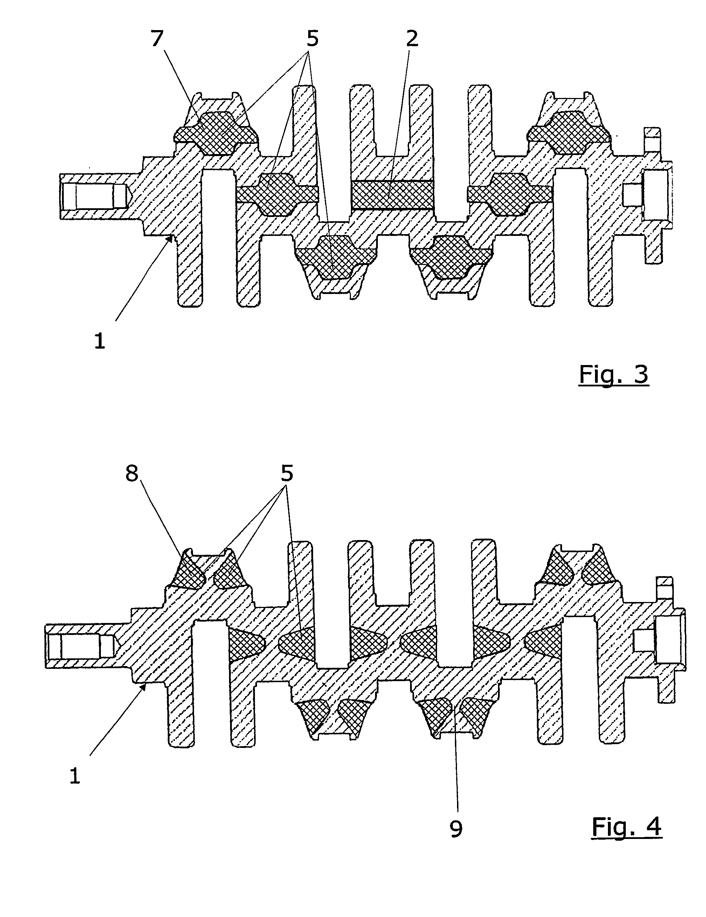

Einerseits können die Metallschäume in Form von verlorenen (in der Kurbelwelle verbleibenden) Gießkernen bereits beim Gießvorgang eingebracht werden (in diesem Fall muß der Schmelzpunkt des Schaumes höher sein als der des Gußwerkstoffs, z.B. Stahlschaum), oder auch im Nachhinein durch Ausschäumen der Hohlräume mit entsprechendem Halbzeug (beispielsweise bestehend aus Metallpulver und Treibmittel, z.B. Titanhydrid und anschließender Wärmebehandlung mittels Ofen oder induktiv). Als Alternative können kleine Metallschaum-Stücke durch die verbleibenden Öffnungen (vergl. nachfolgende Ausführungsbeispiele) in die Hohlräume eingebracht und dort verklebt werden. Diese Variante ist insbesondere für die Ausführungsform, welche nachfolgend gemäß Fig. 4 erläutert wird, interessant.

Die Verwendung von Metallschaum als stabilisierendes Füllmaterial hat den zusätzlichen Vorteil, dass Eigenschwingungen der Welle beim Lauf gedämpft werden. Die Laufruhe (Akustik, Vibration) der Welle wird dadurch deutlich verbessert.

Alternativ zum Füllmaterial (5) aus.Metallschaum können die Hohlräume auch durch Auffüllen mit Eisen- oder Stahlhohlkugeln gleichen oder unterschiedlichen Durchmessers stabilisiert werden. Zur Fixierung innerhalb der Hohlräume werden die Eisen- oder Stahlhohlkugeln miteinander verklebt, bzw. untereinander oder an einer Hilfskonstruktion (Metallstift, -rohr) befestigt, z.B. induktiv verschweißt.

Figur 2 zeigt ein Ausführungsbeispiel, bei dem in exzentrischen Bereichen der Welle 'gewinkelte' Hohlräume (6) mit abschnittsweise zylindrischem Profil (in der Art eines gebogenen Rohrs) eingebracht sind. Diese veränderte Geometrie bewirkt eine deutliche Erhöhung der Steifigkeit, so dass die mechanische Belastbarkeit der Welle trotz Gewichtsreduktion weitgehend erhalten bleibt. Durch Wahl des Winkels kann der Kraftfluss im Bereich des Hohlraums definiert werden, wobei für die meisten Anforderungen ein Bereich des Winkels zwischen 15° bis 45° vorteilhaft ist, aber auch andere Werte sind natürlich nicht ausgeschlossen. Dargestellt ist in Figur 2 eine Welle (1), die derartige Hohlräume (6) mit ausschließlich identischer Form (Winkel, Durchmesser) aufweist. In Abweichung von dem dargestellten Ausführungsbeispiel können für Anpassungen an die lokal unterschiedlichen Belastungen verschiedene 'gewinkelte' Hohlräume (d.h. Variation in Winkel und Durchmesser) in einer Welle zum Einsatz kommen.

Ein alternatives Ausführungsbeispiel ist in Figur 3 dargestellt, bei dem Hohlräume (7) mit variierendem Querschnitt und nahezu geschlossener Außenkontur vorhanden sind. Durch die im Innenbereich aufgeweitete Form dieser Hohlräume ist die Materialreduktion relativ hoch und gleichzeitig der Spannungsverlauf günstig beeinflußt, so daß höhere Belastungen möglich sind. Diese Hohlräume können in verschiedenen Bereichen (axial, exzentrisch) der Welle eingebracht werden und auch mit anders geformten Hohlräumen (2) kombiniert werden.

Eine andere Möglichkeit der Gewichtsreduzierung ist in Figur 4 dargstellt. In dieser Ausführung werden keine durchgängigen Hohlräume eingesetzt, sondern kavernenartige Ausnehmungen (8) axial bzw. in exzentrischen Bereichen der Welle angebracht. Die Form der Ausnehmungen kann dabei wie dargestellt konisch (auch mit unterschiedlichem Öffnungswinkel, vorzugsweise zwischen 15°-45°) ausgebildet sein. Ebenso können die Ausnehmungen zueinander und zur Rotationsachse der Welle unterschiedlich orientiert sein. Variierende Größen und andere Formen (Kalotte, Kugelsegment, Ellipsenabschnitt, abgestumpfter Kegel, usw.) sind ebenso möglich (nicht dargestellt). Vorzugsweise ist am Eintritt der Lager ein größerer Durchmesser vorhanden, zur Mitte der Lager ein kleinerer, um die Steifigkeit zu optimieren und auch in diesem Bereich eine Ölführung zu ermöglichen.

In der dargestellten Ausführung sind identische Ausnehmungen paarweise symmetrisch angeordnet, wodurch Stege (9) zwischen den Ausnehmungen verbleiben, die eine stabilisierende Wirkung haben. Grundsätzlich kann aber auch eine Kombination von Ausnehmungen und Hohlräumen der verschiedenen Ausbildungen in einer Welle für bestimmte Belastungsvorgaben vorteilhaft sein.

Eine mechanisch besonders stabile Ausführungsform ist in Figur 5 dargestellt. Dabei ist der gewichtsreduzierende Hohlraum (10) ohne Öffnungen vollständig geschlossen im Material der Welle eingebettet. Dadurch und durch entsprechende Formgebung (z.B. elliptisch, kugelförmig) liefert diese Ausführung bezüglich des Kraftflusses höchste Belastungswerte, die - wie in Fig. 12 dargestellt - durch stabilisierendes Füllmaterial (5) noch optimiert werden können.

Für die Herstellung einer solchen Ausführung der Leichtbaukurbelwelle wird beim Gießen als Verdrängungskörper (z.B. Ellipse) ein entsprechend geformter hochschmelzender Metallschaum an den entsprechenden Positionen fixiert und so vollständig eingegossen. Figur 6 zeigt die Fixierung der Verstärkungselemente oder Metallschaum-Verdrängungskörper (hier nicht dargestellt sondern nur in Form der korrespondierenden Hohlräume erkennbar) in der Giessform durch Metallrohre (11), die vorzugsweise aus einem hochschmelzenden Eisen- oder Stahlwerkstoff bestehen und gleichzeitig den Ölkanal darstellen können. Die einzulegenden Verstärkungelemente/Metallschaumkörper werden dabei schon vor dem Einlegen mit den einzugießenden Metallrohren verbunden, z.B. durch Schweißen.

Für den Einsatz von Verdrängungskörpern aus Metallschaum ist ein in der Außenfläche geschlossener (d.h. porenfreier) Schaum vorteilhaft, der ein Eindringen der Gußschmelze und damit mögliche Ausfüllung der Schaumblasen des Verdrängungskörpers verhindert. Dies kann alternativ auch durch Ummanteln des Metallschaums, z.B. mit Stahlblech, erreicht werden. In gleicher Weise können auch Eisen- bzw. Stahlhohlkugeln als Füllmaterial (5) ummantelt und eingegossen werden.

Grundsätzlich kann bei allen vorgenannten Ausführungsbeispielen eine weitere Erhöhung der Steifigkeit der Leichtbaukurbelwelle durch Einbringen von Querrippen in die Hohlräume und/oder Ausnehmungen erfolgen. Figur 7 zeigt als Beispiel einen Querschnitt durch einen Hohlraum (12) mit einer an der Wandung (13) fixierten (Kleben, Schweißen) Querrippe (14). Eine Querrippe (14) kann auch direkt angegossen werden, z.B. unter Verwendung geteilter Gießkerne. Lage, Stärke und Anzahl der Querrippen kann dabei an den Kraftverlauf angepasst werden. Je nach Belastung kann die 'Verstrebung' aus einer durchgehenden Querrippe (14) oder aus mehreren durchgehenden Querrippen (nicht dargestellt) oder auch aus mehreren nicht durchgehenden Rippen unterschiedlichster Geometrie bestehen (nicht dargestellt).

Stabilisierende Füllmaterialien (5) wie Metallschaum, Hohlkugeln usw. (hier nicht dargestellt sondern nur in Form der korrespondierenden Hohlräume erkennbar) werden mit den eingebrachten Querrippen (14) kombiniert.

Zur Einstellung der Grenzflächen zwischen den Verdrängungskörpern und dem Gusswerkstoff und zur Verhinderung des Aufschmelzens der Verdrängungskörper ist eine vollständige oder teilweise Beschichtung der Verdrängungskörper denkbar. Des weiteren verhindert die Beschichtung die C-Diffusion von der Schmelze in die Verdrängungskörper, was einen negativen Einfluß auf die mechanischen Kennwerte nach sich ziehen würde. Diese Beschichtung kann mittels thermischer Spritzverfahren (z.B. Lichtbogendrahtspritzen, Plasmabeschichtung), Sol-Gel, galvanisch oder als Schlichte (Al₂O₃, Y₂O₃/Al₂O₃, TiO₂/Al₂O₃, MgAl₂O₄, Zr/Al-Silicat, NiCrAlY- und NiTi-Schichten, Bornitrid; generell Metall-Oxide) aufgetragen werden.

Die aufgeführten steifigkeitsoptimierten Konstruktionen sind grundsätzlich für alle üblichen Gusslegierungen für Kurbelwellen (z.B. Sphäroguss nach DIN EN 1563) einsetzbar. Die Verwendung von bainitischem Gusseisen (ADI Austempered Ductile Iron) nach DIN EN 1564 bietet darüber hinaus, bedingt durch die anschließende Wärmebehandlung, die Möglichkeit, die durch das Eingiessen von Verdrängungskörpern vielleicht entstandenen Spannungen abzubauen.

## Patentansprüche

1. Gegossene Leichtbaukurbelwelle (1)
mit exzentrischen Strukturen wie Pleuel, Hauptlager usw.,
wobei zur Gewichtsreduktion Hohlräume (2,3,4,6,7,10,12) und ggf. Ausnehmungen (8)
sowohl im Bereich der Rotationsachse, als auch davon isoliert im Bereich der exzentrischen Strukturen vorhanden sind,
**dadurch gekennzeichnet,**
**dass** zur Erhöhung der mechanischen Belastbarkeit der Welle (1) zumindest ein Hohlraum (2,3,4,6,7,10,12)
vorhanden ist,
worin sich stabilisierendes Füllmaterial (5) befindet
und
**dass** dieser zumindest eine Hohlraum (2,3,4,6,7,10,12)
derart besonders gestaltet oder angeordnet ist,
- **dass** dieser zumindest eine Hohlraum (2,3,4,6,7,10,12) abgewinkelt verlaufend stückweise zylindrisch gestaltet ist,
- oder das dieser zumindest eine Hohlraum (2,3,4,6,7,10,12) vollständig im Material der Welle eingegossen ist.

2. Leichtbaukurbelwelle (1) nach Anspruch 1,
**dadurch gekennzeichnet,**
**dass** das stabilisierende Füllmaterial (5) aus Metallschaum besteht.

3. Leichtbaukurbelwelle (1) nach Anspruch 2,
**dadurch gekennzeichnet,**
**dass** der Metallschaum Aluminium-, Zink-, Eisen-, Stahl-Schaum ist.

4. Leichtbaukurbelwelle (1) nach einem der Ansprüche 1 bis 3,
**dadurch gekennzeichnet,**
**dass** wobei zumindest einer der Hohlräume (2,3,4,6,7,10,12) eine Querrippe (14) aufweist.

5. Leichtbaukurbelwelle (1) nach Anspruch 1,
**dadurch gekennzeichnet,**
**dass** das stabilisierende Füllmaterial aus Eisen- oder Stahlhohlkugeln besteht.

6. Verfahren zur Herstellung einer Leichtbaukurbelwelle (1) nach einem der Ansprüche 1 bis 5,
wobei während des Gießens
sowohl im Bereich der Rotationsachse der Leichbaukurbelwelle (1), als auch im Bereich exzentrischer Strukturen zumindest ein Verdrängungskörper eingesetzt wird,
so dass in diesen Bereichen Hohlräume (2,3,4,6,7,10,12)
gebildet werden,
**dadurch gekennzeichnet,**
**dass** das stabilisierende Füllmaterial (5)
als Verdrängungskörper eingesetzt wird,
wobei zumindest ein gewinkelt gestalteter Verdrängungskörper verwendet wird oder
wobei zumindest ein Verdrängungskörper derart angeordnet wird, dass er beim Gießen vollständig umschlossen wird.

7. Verfahren nach Anspruch 6,
**dadurch gekennzeichnet,**
**dass** bei der Verwendung von Metallschaum als Verdrängungskörper, dieser vor dem Eingießen ummantelt wird.

8. Verfahren nach Anspruch 6,
**dadurch gekennzeichnet,**
**dass** als Verdrängungskörper Metallschaum mit einer zumindest teilweise geschlossenporigen Oberfläche verwendet wird.

9. Verfahren nach Anspruch 6, 7 oder 8,
**dadurch gekennzeichnet,**
**dass** das die Verdrängungskörper zur Fixierung während des Gießens an Hilfskonstruktionen (11), z.B. Metallstiften oder Metallrohren, oder an Ölführungsrohren befestigt werden.

10. Verfahren nach einem der Ansprüche 6 bis 9,
**dadurch gekennzeichnet,**
**dass** die Verdrängungskörper und/oder Hilfskonstruktionen (11) vor dem Eingießen mit einem die Diffusion von Kohlenstoff behindernden Material zumindest teilweise beschichtet werden.

11. Verfahren nach Anspruch 10,
**dadurch gekennzeichnet,**
**dass** die Beschichtung mittels thermischer Spritzverfahren (z.B. Lichtbogendrahtspritzen, Plasmabeschichtung), galvanisch oder als Schlichte (z.B. Al₂O₃, Y₂O₃/Al₂O₃,TiO₂/Al₂O₃, MgAl₂O₄, Zr/Al-Silicat, NiCrAlY- und NiTi-Schichten, Bornitrid) aufgetragen wird.

## Claims

1. Cast lightweight crankshaft (1) with eccentric structures, such as connecting rods, main bearings etc., there being cavities (2,3,4,6,7,10,12) and optionally recesses (8) both in the region of the axis of rotation and isolated therefrom in the region of the eccentric structures, for the purpose of reducing weight,
**characterized**
**in that**, to increase the mechanical load-bearing capacity of the shaft (1), there is at least one cavity (2,3,4,6,7,10,12) in which stabilizing filling material (5) is situated, and
**in that** this at least one cavity (2,3,4,6,7,10,12) is specially designed or arranged in such a manner
that this at least one cavity (2,3,4,6,7,10,12) is of partially cylindrical design with an angled profile,
or that this at least one cavity (2,3,4,6,7,10,12) is completely sealed in the material of the shaft.

2. Lightweight crankshaft (1) according to Claim 1,
**characterized**
**in that** the stabilizing filling material (5) consists of metal foam.

3. Lightweight crankshaft (1) according to Claim 2,
**characterized**
**in that** the metal foam is aluminium, zinc, iron or steel foam.

4. Lightweight crankshaft (1) according to one of Claims 1 to 3,
**characterized**
**in that** at least one of the cavities (2,3,4,6,7,10,12) has a transverse rib (14).

5. Lightweight crankshaft (1) according to Claim 1,
**characterized**
**in that** the stabilizing filling material consists of iron or steel hollow balls.

6. Method for producing a lightweight crankshaft (1) according to one of Claims 1 to 5, at least one displacer being used both in the region of the axis of rotation of the lightweight crankshaft (1) and in the region of eccentric structures during the casting, so that cavities (2,3,4,6,7,10,12) are formed in these regions,
**characterized**
**in that** stabilizing filling material (5) is used as the displacer, at least one displacer of angled design being used, or at least one displacer being arranged in such a manner that it is completely enclosed during the casting.

7. Method according to Claim 6,
**characterized**
**in that** when metal foam is used as the displacer, said foam is coated before being sealed in.

8. Method according to Claim 6,
**characterized**
**in that** metal foam having an at least partially closed-pore surface is used as the displacer.

9. Method according to Claim 6, 7 or 8,
**characterized**
**in that** the displacers are fastened to auxiliary constructions (11), for example metal pins or metal pipes, or to oil-conducting pipes, so that they are fixed during the casting.

10. Method according to one of Claims 6 to 9,
**characterized**
**in that**, before being sealed in, the displacers and/or auxiliary constructions (11) are at least partially coated with a material preventing the diffusion of carbon.

11. Method according to Claim 10,
**characterized**
**in that** the coating is applied by means of thermal spraying processes (for example electric arc spraying, plasma coating), electroplating or as black washes (for example Al₂O₃, Y₂O₃/Al₂O₃, TiO₂/Al₂O₃, MgAl₂O₄, Zr/Al silicate, NiCrAlY- and NiTi-layers, boron nitride).

## Revendications

1. Vilebrequin (1) de construction légère, venu de fonderie, doté de structures excentriques telles que des bielles, des paliers principaux, etc., sachant qu'à des fins de réduction de poids, des cavités (2, 3, 4, 6, 7, 10, 12) et éventuellement des évidements (8) sont présents tant dans la région de l'axe de rotation que, séparément, dans la région des structures excentriques,
**caractérisé en ce que**, afin d'augmenter la capacité de sollicitation mécanique de l'arbre (1), au moins une cavité (2, 3, 4, 6, 7, 10, 12) dans laquelle se trouve du matériau de remplissage stabilisant (5) est présente,
et **en ce que** cette cavité (2, 3, 4, 6, 7, 10, 12) au moins unique est conçue ou disposée d'une manière particulière, de telle sorte
- que cette cavité (2, 3, 4, 6, 7, 10, 12) au moins unique est réalisée partiellement cylindrique, en s'étendant en coude,
- ou que cette cavité (2, 3, 4, 6, 7, 10, 12) au moins unique est entièrement coulée dans le matériau de l'arbre.

2. Vilebrequin (1) de construction légère selon la revendication 1, **caractérisé en ce que** le matériau de remplissage stabilisant (5) est constitué de mousse métallique.

3. Vilebrequin (1) de construction légère selon la revendication 2, **caractérisé en ce que** la mousse métallique est de la mousse d'aluminium, de zinc, de fer, d'acier.

4. Vilebrequin (1) de construction légère selon l'une quelconque des revendications 1 à 3, **caractérisé en ce qu'**au moins une des cavités (2, 3, 4, 6, 7, 10, 12) présente une nervure transversale (14).

5. Vilebrequin (1) de construction légère selon la revendication 1, **caractérisé en ce que** le matériau de remplissage stabilisant est constitué de billes creuses de fer ou d'acier.

6. Procédé de fabrication d'un vilebrequin (1) de construction légère selon l'une quelconque des revendications 1 à 5, sachant que, pendant la coulée, au moins un corps de refoulement est inséré tant dans la région de l'axe de rotation du vilebrequin (1) de construction légère que dans la région des structures excentriques, de sorte que des cavités (2, 3, 4, 6, 7, 10, 12) sont formées dans ces régions,
**caractérisé en ce que** le matériau de remplissage stabilisant (5) est inséré sous forme de corps de refoulement,
sachant qu'on utilise au moins un corps de refoulement réalisé coudé,
ou sachant qu'au moins un corps de refoulement est disposé de telle sorte qu'il est entièrement enveloppé lors de la coulée.

7. Procédé selon la revendication 6, **caractérisé en ce que**, en cas d'utilisation de mousse métallique comme corps de refoulement, cette mousse est munie d'un enrobage avant la coulée.

8. Procédé selon la revendication 6, **caractérisé en ce qu'**on utilise comme corps de refoulement une mousse métallique ayant une surface au moins partiellement à pores fermés.

9. Procédé selon la revendication 6, 7 ou 8, **caractérisé en ce que** les corps de refoulement, afin de les immobiliser pendant la coulée, sont fixés à des constructions auxiliaires (11), par exemple des tiges métalliques ou des tubes métalliques, ou à des tubes de guidage d'huile.

10. Procédé selon l'une quelconque des revendications 6 à 9, **caractérisé en ce que** les corps de refoulement et/ou les constructions auxiliaires (11) sont, avant la coulée, revêtus au moins partiellement d'un matériau empêchant la diffusion de carbone.

11. Procédé selon la revendication 10, **caractérisé en ce que** le revêtement est appliqué au moyen de procédés de projection thermiques (par exemple projection de fils métalliques à l'arc électrique, enduction au plasma), galvaniquement ou sous forme d'enduits (par exemple Al₂O₃, Y₂O_{3/}Al₂O₃, TiO_{2/}Al₂O₃, MgAl₂O₄, silicate Zr/Al, couches de NiCrAlY et de NiTi, nitrure de bore).
